# EUROPEAN PATENT APPLICATION

(11) **EP 2 854 244 A2**
(43) Date of publication of application: **01.04.2015**
(21) Application number: 14185889.4
(22) Date of filing: 23.09.2014
(51) Int. Cl.: H02G 1/12

(54) **Cable stripper**

(30) Priority: 26.09.2013 US 201361882816 P
(71) Applicant: Greenlee Textron Inc., Rockford, Illinois 61109 (US)
(72) Inventor: Tews, Kevin, North Aurora, IL Illinois 60542 (US); Fenske, John, Machesney Park, IL Illinois 61115 (US)
(74) Representative: Müller, Enno

(57) **Abstract**

A cable stripper according to some embodiments of the disclosure includes a first and second bodies which can be moved relative to each other in a ratcheting movement or in a non-ratcheting movement in order to clamp a cable therebetween. The bodies may include ball bearings for engaging with the cable when clamped therebetween.

## Description

This application claims the benefit of United States Provisional Application Serial No. 61/882,816, filed on September 26, 2013, which is incorporated herein by reference in its entirety.

### BACKGROUND OF THE INVENTION

Cable strippers for stripping a sheath of a cable from the wires within the cable are known. A coaxial cable is generally constructed with a single inner copper conductor having an inner insulation, and a very thin aluminum ground shield surrounding the inner insulation. A tough metal braid surrounds the shield in order to protect the shield and to provide further shielding for the inner conductor. The cable further includes an outer jacket which is normally made of polyethylene.

The end of the cable must be stripped down to the inner conductor to terminate the end of the cable to an electrical connector. A sharp blade is used to cut tend of the cable must be stripped down to the inner conductor.

### SUMMARY OF THE INVENTION

A cable stripper in accordance with some example embodiments includes a first and second bodies which can be moved relative to each other in a ratcheting movement or in a non-ratcheting movement in order to clamp a cable therebetween. The bodies of such embodiments may include ball bearings for engaging with the cable when clamped therebetween.

This Summary is provided merely for purposes of summarizing some example embodiments so as to provide a basic understanding of some aspects of the disclosure. Accordingly, it will be appreciated that the above described example embodiments are merely examples and should not be construed to narrow the scope or spirit of the disclosure in any way. Other embodiments, aspects, and advantages of various disclosed embodiments will become apparent from the following detailed description taken in conjunction with the accompanying drawings which illustrate, by way of example, the principles of the described embodiments.

### BRIEF DESCRIPTION OF THE DRAWINGS

The organization and manner of the structure and operation of the disclosed embodiments, together with further objects and advantages thereof, may best be understood by reference to the following description, taken in connection with the accompanying drawings, which are not necessarily drawn to scale, wherein like reference numerals identify like elements in which:

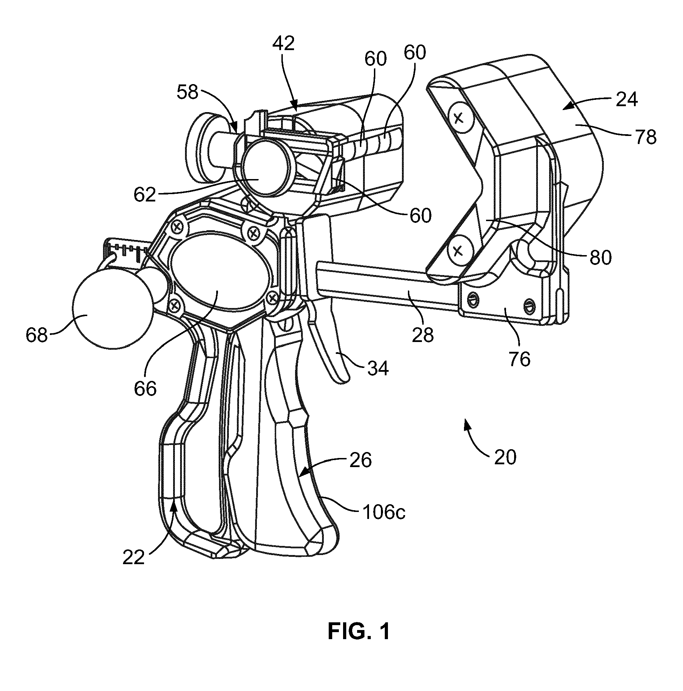

FIG. 1 is a perspective view of a cable stripper which incorporates the features of some example embodiments;

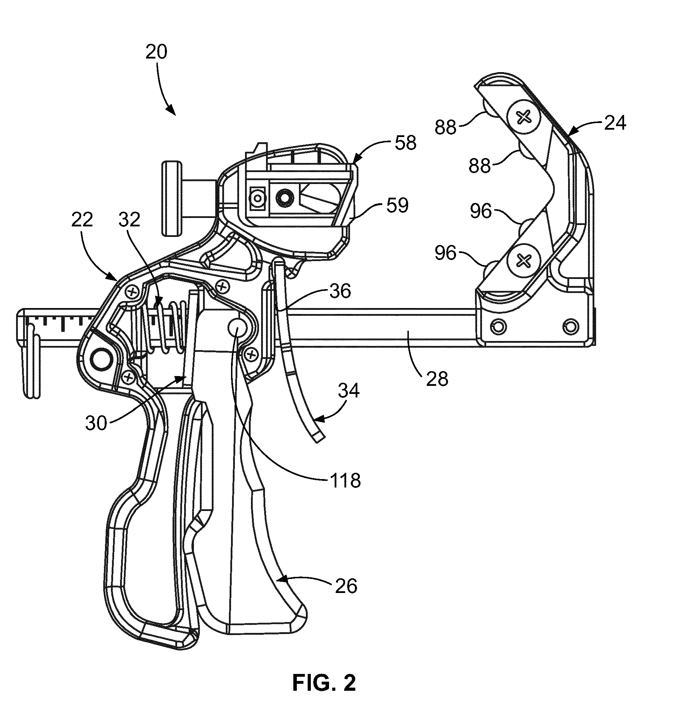

FIG. 2 is side elevation view of the cable stripper;

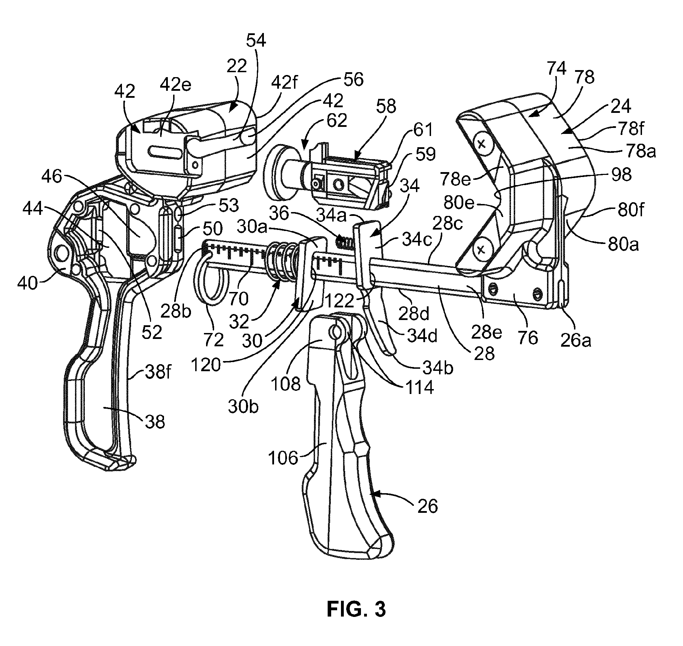

FIG. 3 is an exploded perspective view of the cable stripper;

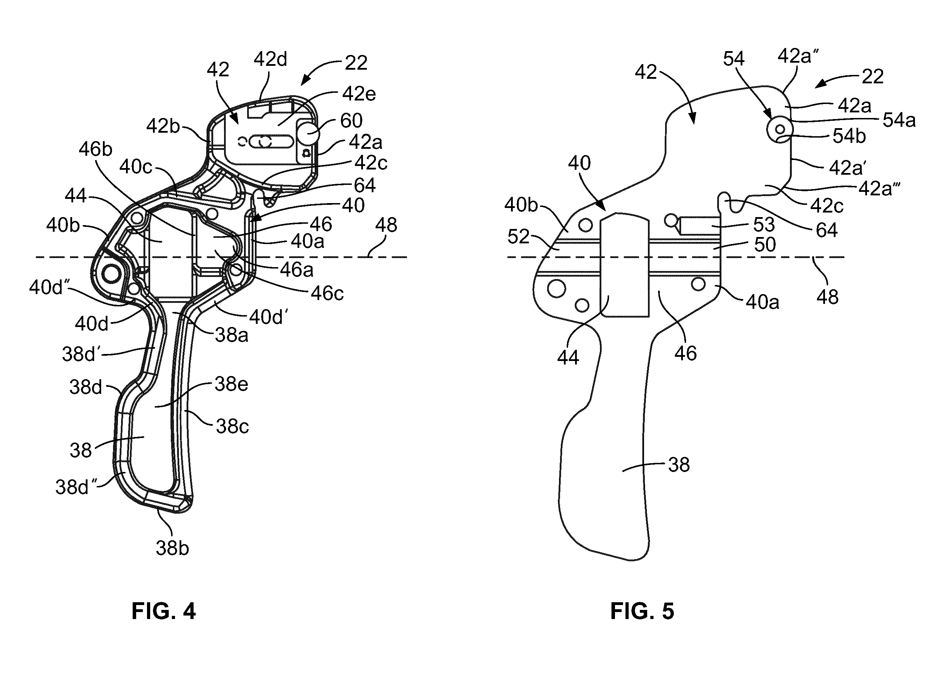

FIG. 4 is a side elevation view of a first body of the cable stripper;
FIG. 5 is a cross-sectional view of the first body;

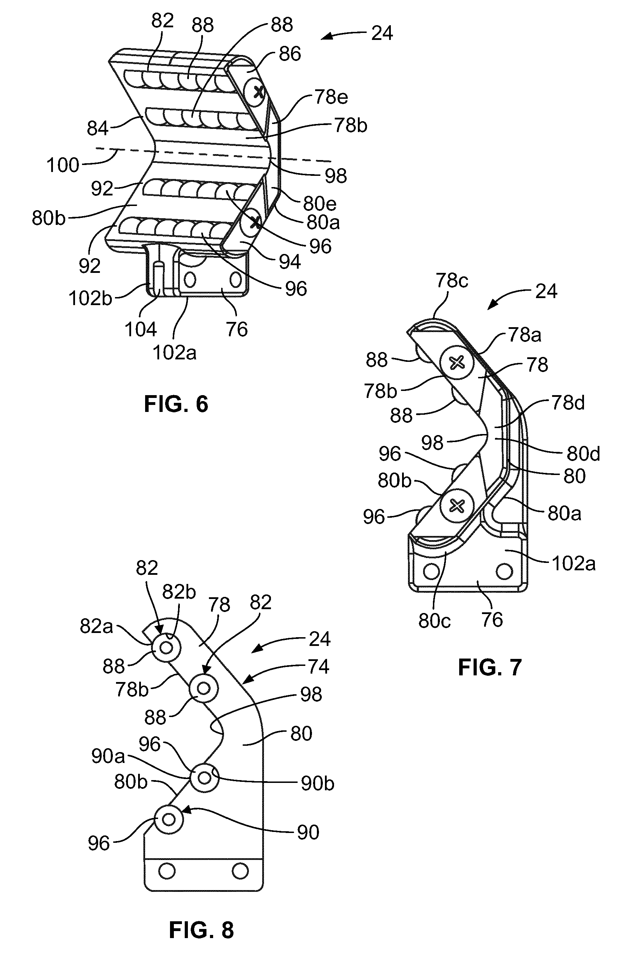

FIG. 6 is a perspective view of a second body of the cable stripper;
FIG. 7 is a side elevation view of the second body;
FIG. 8 is a cross-sectional view of the second body;

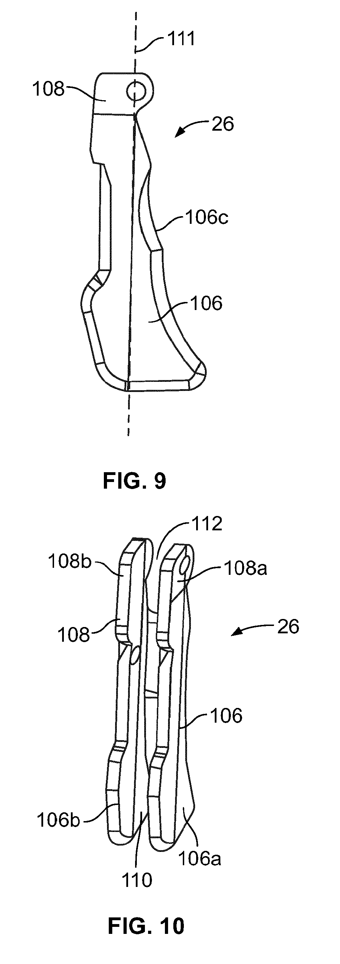

FIG. 9 is a side elevation view of a grip of the cable stripper;
FIG. 10 is a perspective view of the grip;

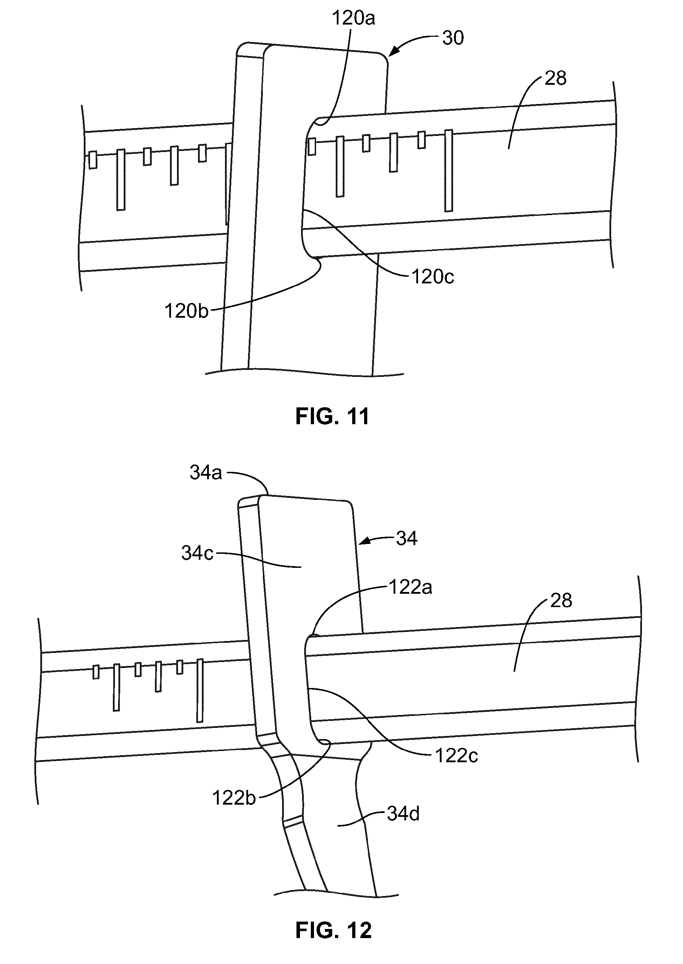

FIG. 11 is a perspective view of a portion of the cable stripper; and
FIG. 12 is a perspective view of another portion of the cable stripper.

### DETAILED DESCRIPTION OF THE ILLUSTRATED EMBODIMENTS

While the invention may be susceptible to embodiment in different forms, there is shown in the drawings, and herein will be described in detail, a specific embodiment with the understanding that the present disclosure is to be considered an exemplification of the principles of the invention, and is not intended to limit the invention to that as illustrated and described herein. Therefore, unless otherwise noted, features disclosed herein may be combined together to form additional combinations that were not otherwise shown for purposes of brevity. It will be further appreciated that in some embodiments, one or more elements illustrated by way of example in a drawing(s) may be eliminated and/or substituted with alternative elements within the scope of the disclosure.

While the terms upper, lower, front, rear and the like are used herein, these are used for ease in description and do not denote a required orientation for use.

A cable stripper 20 is provided for stripping a sheath of a cable from the wires within the cable. The cable stripper 20 includes a first body 22, a second body 24 which is moveable relative to the first body 22, a grip 26, a slide bar 28, a first locking friction plate 30 and its compression spring 32, a second unlocking friction trigger or plate 34 and its compression spring 36.

The first body 22 is formed of metal and includes a handle 38, a mount 40 and a block 42 which are integrally formed together. The mount 40 is between the handle 38 and the block 42.

The handle 38 is elongated having upper and lower ends 38a, 38b, front and rear surfaces 38c, 38d, and side surfaces 38e, 38f such that a user's hand can wrap therearound. The handle 38 provides an ergonomic feel for the user to grip. The front surface 38c is generally arcuate. The rear surface 38d has an upper section 38d' and a lower section 38d", the lower section 38d" is spaced farther away from the front surface 38c than the upper section 38d'.

The mount 40 is generally square-shaped with front and rear walls 40a, 40b and upper and lower walls 40c, 40d which are connected together. The walls 40a-d define a pair of side surfaces. The upper wall 40c extends between and connects the front and rear walls 40a, 40b. The lower wall 40d is divided into a front section 40d' which extends at an angle from the front wall 40a, and a rear section 40d" which extends at an angle from the rear wall 40b; the upper end 38a of the handle 38 spans the distance between the front and rear sections 40d', 40d".

An aperture 44 is defined by the walls 40a-d, the upper end 38a of the handle 38, and a flange 46 which extends rearwardly from the front wall 40a a predetermined distance. A centerline 48 is defined by the mount 40 and extends through the front and rear walls 40a, 40b. The flange 46 has an arcuate front end 46a which extends from the front wall 40a, a planar rear edge 46b and opposite planar side walls 46c which define a width therebetween. The rear edge 46b is perpendicular to the centerline 48. The width of the flange 46 is less than the front wall 40a, such that a pocket is formed by the flange 46 and the front wall 40a. One pocket is formed by the rear side of the front wall 40a and the side wall 46c of the flange 46; the other pocket is formed by the rear side of the front wall 40a and the opposite side wall 46e of the flange 46.

A front passageway 50 extends through the front wall 40a and through the flange 46 and is in communication with the aperture 44. A rear passageway 52 extends through the rear wall 40b and is in communication with the aperture 44. The front and rear passageways 50, 52 are aligned with each other and are aligned on the centerline 48 of the mount 40. The front passageway 50, aperture 44 and rear passageway 52 form a slide bar passageway into which the slide bar 28 as described herein. A blind bore 53 is provided in the front wall 40a and extends rearwardly a predetermined distance. A rear end of the compression spring 36 seats within the blind bore 53.

The block 42 is generally formed as a cube and extends upwardly and forwardly from the upper wall 40c of the mount 40. The block 42 includes front and rear surfaces 42a, 42b, a lower surface 42c which extends from the mount 40, an upper surface 42d and a pair of side surfaces 42e, 42f.

The front surface 42a has a central flat section 42a' which is perpendicular to the centerline 48 of the mount 40, an upper curved section 42a" extending upwardly from the central flat section 42a, and a lower section 42a'" extending downwardly at an angle from the central flat section 42a'. An elongated slot 54 is provided the front surface 42a, extends between the side surfaces 42e, 42f, and is perpendicular to the centerline 48 of the mount 40. The slot 54 is formed from an elongated front opening 54a, and a generally cylindrical recess 54b extending reardwardly from the front opening 54a. The ends of the slot 54 are closed by suitable means, such as a wall 56 formed by a portion of the block 42 at side surface 42f and a tab 61 which is fastened into the side surface 42e.

A plurality of side-by-side ball bearings 60 are mounted in the slot 54. The ball bearings 60 are formed as spheres and a portion of each ball bearing 60 extends outwardly from the front opening 54a of the slot 54 and the front surface 42a of the block 42, but the ball bearings 60 cannot escape through the front opening 54a of the slot 54. The ball bearings 60 are slightly smaller than the diameter of the recess 54b so that the ball bearings 60 move freely within the slot 54. The ball bearings 60 may be formed of any suitable material, such as by way of non-limiting example, plastic or metal, and some of the ball bearings 60 in the slot 54 may be formed of plastic and others formed of metal.

The conventional cable cutter/stripper 58 has a blade 59 and an adjustment mechanism 62 for adjusting how far the blade 59 extends outwardly from the front surface 42a of the block 42.

The lower surface 42c of the block 42 has a recess 64 therein which is proximate to the mount 40 and which extends between the side surfaces 42e, 42f. The unlocking friction plate 34 seats therein as described herein.

Covers 66 are attached to the side surfaces of the walls 40a-d by suitable means, such as fasteners.

A revolving ball knob 68 can be attached to the mount 40.

The slide bar 28 is formed of an elongated metal bar, which preferably has a generally oval cross-section. The slide bar 28 has front and rear ends 28a, 28b, upper and lower surfaces 28c, 28d, and opposite side surfaces 28e, each of which are planar. The slide bar 28 seats within the aligned passageways 50, 52 of the mount 40 and extends through the aperture 44. The slide bar 28 can be slid relative to the first body 22, along the centerline 48. Markings 70 are provided along the slide bar 28.

A ring 72 may be attached to the rear end 28b of the slide bar 28 to provide a means for hanging the cable stripper 20 on a bench or other work surface.

The second body 24 mounts on the front end of the slide bar 28. The second body 24 is formed of metal and has a V-shaped block 74 attached to a mount 76.

The block 74 is formed of an upper portion 78 and a lower portion 80 which are angled relative to each other to form a V-shaped face. In some embodiments, the upper and lower portions 78, 80 are preferably angled relative to each other at an angle of 100 degrees, or substantially equal thereto. It will be appreciated that the upper and lower portions 78,80 may be angled relative to each other at angles other than 100 degrees to form a V-shaped face within the scope of the disclosure.

The upper portion 78 has front and rear surfaces 78a, 78b, an upper surface 78c, a lower edge 78d, which is joined to the upper edge 80d of the lower portion 80, and a pair of side surfaces 78e, 78f. A pair of elongated slots 82 are provided the rear surface 78b of the upper portion 78, each slot 82 extends between the side surfaces 78e, 78f, and each slot 82 is perpendicular to the centerline 48 of the mount 40. Each slot 82 is formed from an elongated rear opening 82a, and a generally cylindrical recess 82b extending forwardly from the rear opening 82a. The ends of the slots 82 are closed by suitable means, such as a wall 84 formed by the upper portion 78 and a cover 86 which is secured to the side surface 78e of the upper portion 78.

A plurality of side-by-side ball bearings 88 are mounted in each of the slots 82. The ball bearings 88 are formed as spheres and a portion of each ball bearing 88 extends outwardly from the respective rear opening 82a of the respective slot 82 and the rear surface 78b of the upper portion 78, but the ball bearings 88 cannot escape from the slots 82. The ball bearings 88 are slightly smaller than the diameter of the recess 82b so that the ball bearings 88 move freely within the slots 82. The ball bearings 88 may be formed of any suitable material, such as by way of non-limiting example, plastic or metal, and some of the ball bearings 88 in the slots 82 may be formed of plastic and others formed of metal.

The lower portion 80 has front and rear surfaces 80a, 80b, a lower surface 80c, an upper edge 80d, which is joined to the lower edge 78d of the upper portion 78, and a pair of side surfaces 80e, 80f. A pair of elongated slots 90 are provided the front surface 80b of the lower portion 80, each slot 90 extends between the side surfaces 80e, 80f, and each slot 90 is perpendicular to the centerline 48 of the mount 40. Each slot 90 is formed from an elongated rear opening 90a, and a generally cylindrical recess 90b extending forwardly from the rear opening 90a. The ends of the slots 90 are closed by suitable means, such as a wall 92 formed by the lower portion 80 and a cover 94 which is secured to the side surface 80e of the lower portion 80.

A plurality of side-by-side ball bearings 96 are mounted in each of the slots 90. The ball bearings 96 are formed as spheres and a portion of each ball bearing 96 extends outwardly from the respective rear opening 90a of the respective slot 90 and the rear surface 78b of the upper portion 78, but the ball bearings 96 cannot escape from the slots 90. The ball bearings 96 are slightly smaller than the diameter of the recess 90b so that the ball bearings 96 move freely within the slots 90. The ball bearings 96 may be formed of any suitable material, such as by way of non-limiting example, plastic or metal. In some embodiments, different respective ball bearings 96 in the slots 90 may be formed of different materials, such that, for example, in some embodiments some ball bearings 96 may be formed of plastic and others may be formed of metal.

A joint 98 is formed between the upper and lower portions 78, 80 along the rear surfaces 78b, 80b. A centerline 100 extends along this joint and is perpendicular to centerline 48. The joint 98 may be curved. The slots 88, 90 are symmetrical about centerline 100.

The mount 76 extends from the lower surface 80c of the lower portion 80. The mount 76 has a pair of legs 102a, 102b which define a space 104 therebetween. The space 104 is slightly wider than the width of the slide bar 28. The slide bar 28 seats within the space 104 and the legs 102a, 102b are attached to the slide bar 28 by suitable means, such as fasteners, so that the block 74 extends upwardly from the slide bar 28.

When the second body 24 is attached to the slide bar 28, the rear surfaces 78b, 80b of the second body 24 face the front surface 42a of the block 42 of the first body 22. As such, the row of ball bearings 60 on the block 42 face the joint 98 between the upper and lower portions 78, 80 of the second body 24. The lower curved section 42a□ aligns with the lower portion 80.

The grip 26 attaches to the mount 40 and is rotatable relative to the first body 22. The grip 26 includes an elongated handle 106 integrally formed with a head 108 at the upper end thereof. The handle 106 is generally U-shaped, with a pair of legs 106a, 106b and a curved base wall 106c that defines an elongated recess 110. The base wall 106c is contoured to enable a user to easily grip the grip 26 with his/her fingers. A vertical centerline 111 is defined by the handle 106. The recess 110 is sized to be slightly wider than the width of the handle 38 of the first body 22. The head 108 is formed of two portions 108a, 108b which extend upwardly from the respective legs 106a, 106b of the handle 106 and are separated from each other by a space 112. Each portion 108a, 108b has a curved front surface 114 and a rear surface 116; the centerline 111 extends through the head 108.

The flange 46 of the mount 40 seats in the space 112 between the portions 108a, 108b of the head 108, such that side surfaces of the portions 108a, 108b abut against the side walls 46c of the pockets formed by the flange 46. The curved front surface 114 of each portion 108a, 108b seats in the arcuate front end 46a of the respective pocket formed by the flange 46. The head 108 is attached to the mount 40 by a pivot, which may be formed by pegs on the inner surface of the covers 66 that fit into blind holes 118. The handle 38 is partially seated in the recess 110.

The locking friction plate 30 and its compression spring 32 are mounted on the slide bar 28 and within the aperture 44 in the first body 22. The locking friction plate 30 is preferably rectangular in cross-section and has opposite front and rear surfaces. The locking friction plate 30 has an aperture 120 therethrough, having a top wall 120a, a bottom wall 120b and opposite side walls 120c. The aperture 120 has a dimension between the top wall 120a and the bottom wall 120b which is sized to be slightly larger than the slide bar 28 which seats therethrough. An upper portion 30a of the locking friction plate 30 extends upwardly from the slide bar 28, and a lower portion 30b of the locking friction plate 30 extends downwardly from the slide bar 28.

The compression spring 32 encircles the slide bar 28. The compression spring 32 seats in the aperture 44 between the locking friction plate 30 and the front surface of the rear wall 40b.

The unlocking friction plate 34 seats on the slide bar 28 and is positioned between the mount 76 of the second body 24 and the front surface 40a of the mount 40 of the first body 22. The unlocking friction plate 34 is formed of an elongated member having an upper end 34a, a lower end 34b, a planar upper portion 34c extending from the upper end 34a to a lower portion 34d which is curved relative to the upper portion 34c. The upper portion 34c has an aperture 122 therethrough, having a top wall 122a, a bottom wall 122b and opposite side walls 122c. The aperture 122 has a dimension between the top wall 122a and the bottom wall 122b which is sized to be slightly larger than the slide bar 28 which seats therethrough. The upper end 34a of the unlocking friction plate 34 seats in the recess 64 in the block 42 of the first body 22. The lower portion 34d of the unlocking friction plate 34 extends downwardly from the slide bar 28 and is proximate to the grip 26.

The rear end of the compression spring 36 seats within the blind bore 53 and the front end abuts against the upper portion 34c of the unlocking friction plate 34. The front end of the compression spring 36 presses against the unlocking friction plate 34.

In an at-rest condition (the grip 26 is not depressed), the centerline 111 of the grip 28 is perpendicular to the centerline 48 of the first body 22, the locking friction plate 30 is generally perpendicular to the slide bar 28 and abuts against the planar rear edge 46b of the flange 46 and abuts against the head 108 of the grip 26, the upper portion 34c of the unlocking friction plate 34 is angled relative to the slide bar 28, and the compression springs 32, 36 are in their expanded states. The upper edge 120a of the aperture 120 through the locking friction plate 30 is engaged with the upper surface 28c of the slide bar 28. Since the aperture 120 through the locking friction plate 30 is slightly larger than the slide bar 28, the lower edge 120b of the aperture 120 through the locking friction plate 30 is not engaged with the lower surface 28d of the slide bar 28 such that a gap is provided therebetween. The angle of unlocking friction plate 34 causes the rear upper edge 122a and the front of lower edge 122b to make contact with the slide bar 28. This contact, in addition to the contact of surface 34c with opening 64 prevents the movement of the slide bar 28 in the forward direction. The frictional engagement is easily overcome if the user moves the slide bar 28 in the rearward direction due to the same angle of the unlocking friction plate 34.

When the first body 22 and the second body 24 are separated from each other, the cable (not shown) to be stripped is inserted between the blocks 42, 74.

In use, the grip 26 is depressed to rotate and move the grip 26 toward the handle 38 of the first body 22. When this rotation occurs, the curved front surface 114 of each portion 108a, 108b rotates in the arcuate front end 46a of the respective pocket formed by the flange 46, and the handle 38 enters into the recess 110 in the grip 26. The head 108 of the grip 26 engages the lower portion 30b of the locking friction plate 30 and moves the lower portion 30b rearwardly, away from the rear edge 46b of the flange 46, thereby moving the locking friction plate 30 at an angle relative to the rear edge 46b of the flange 46, and compressing the spring 32.

Upon continued depression of the grip 26, the lower portion 30b of the locking friction plate 30 continues to move rearwardly. When the locking friction plate 30 reaches a predetermined angle, the slide bar 28 fills the space in the aperture 120 of the locking friction plate 30 such that the locking friction plate 30 and the slide bar 28 become wedged together. The frictional engagement between the unlocking friction plate 34 and the slide bar 28 is overcome by this force so that the slide bar 28 can slide relative to the unlocking friction plate 34. Further depression of the grip 26 causes the slide bar 28, and the second body 24 mounted thereon, to move rearwardly with the rearward movement of the locking friction plate 30 and further compression of the compression spring 32, such that the second body 24 moves toward the first body 22. When the grip 26 is released, the compression springs 32, 36 returns to their expanded states, thereby disengaging the locking friction plate 30 from the slide bar 28 and frictionally re-engaging the unlocking friction plate 34 with the slide bar 28, and returning the locking friction plate 30 and the unlocking friction plate 34 to the at-rest positions. This can be repeated over and over again to move the second body 24 toward the first body 22 to clamp the cable in a ratcheting-type movement. This configuration allows a user to easily clamp the cable using a single hand.

When the cable is clamped between the blocks 42, 74, the cable contacts the ball bearings 60,88,96 along all three lines of ball bearings 60,88,96. The contact between the ball bearings 60, 88, 96 and the cable centers the cable with the center of the block 74. The blocks 42, 74 can freely rotate and translate along the length of the cable while maintaining the position of the cable center relative to the joint 98 of the block 74 as a result of the engagement of the ball bearings 60,88,96 with the cable. Additional slots with bearings can be added to the block 74 in order to sufficiently capture a cable that would make contact with the bearings 88, 96 too far from the 100 degree optimum retainment angle. As the cable diameter increases or decreases, the cable is constrained by the ball bearings 60,88,96, except for cables under approximately one inch which may not make contact with the ball bearings 88, 96 in block 74, but rather make contact with ball bearings 60 with surfaces 78b, 80b so that the cable remains centered.

During the stripping of the cable with the cable stripper 20, the cable stripper 20 is rotated around the cable to cut the sheath of the cable using the cutting blade 59. This may be accomplished by the user placing one hand on the cable and his/her hand on the revolving ball knob 68. The ball bearings 60, 88, 96 in the blocks 42, 74 reduce the friction during the cable stripping process. The use of ball bearings 60, 88, 96 provides advantages over rollers. The use of the ball bearings 60, 88, 96 reduces friction during rotation around the cable, and reduces the friction of axial movement. The use of ball bearings 60, 88, 96 also provides greater redundancy in the event that environmental contaminates prevent a rolling element from rolling freely.

When the cable has been stripped using the cable stripper 20, the second body 24 is quickly and easily moved away from the clamped position (proximate to the first body 22) in a non-ratcheting movement by using the unlocking friction plate 34 to resize the cable stripper 20. With the grip 26 released, the user depresses the unlocking friction plate 34 to move the lower portion 34d to be proximate to the grip 26, thereby compressing the spring 36. This depression of the unlocking friction plate 34 disengages the frictional engagement between the unlocking friction plate 34 and the slide bar 28 and allows the user to grasp the block 74 and pull the slide bar 28 forwardly such that the second body 24 moves away from the first body 22. When the desired position of the second body 24 is achieved, the user releases the unlocking friction plate 34, which causes the spring 36 to expand, and move the unlocking friction plate 34 back to the at-rest position. As a result, the slide bar 28 is frictionally engaged with the unlocking friction plate 34 so that another cable to be stripped can be positioned between the blocks 42, 74.

The second body 24 can be quickly and easily moved toward the clamped position. The user pushes the bodies 22, 24 together which moves the slide bar 28 rearwardly until the second body 24 abuts the cable. The unlocking friction plate 34 is overcome during this pushing. Thereafter, the grip 26 is depressed to ratchet the second body 24 toward the first body 22 as described herein to securely clamp the cable for stripping.

In use, the major thumb pad of the user's hand engages the lower section 38d" of the rear surface 38d and the user's thumb wraps around the upper section 38d' of the rear surface 38d. The thumb of the user engages against the rear section 40d" of the lower wall 40d of the mount 40. The fingers of the user wrap around the base wall 106c of the grip 26. This provides a comfortable grip for the user.

As a result of the structure, the cable stripper 20 is easy to use, it can be quickly resized for a wide range of cable sizes, and it can be secured or released from a cable with one-handed operation. The blocks 42, 74 provides additional leverage so that a user can secure a tool to a cable that may be deformed. The added leverage helps to straighten the cable and hold the cutting blade 59 at a consistent cutting depth when the cable stripper 20 is rotated around the cable.

While the conventional cable cutter/ stripper 58 is shown as described as being secured to the side surface 42e of the block 42 of the first body 22, the conventional cable cutter/stripper 58 could instead be attached to the second body 24.

While particular embodiments are illustrated in and described with respect to the drawings, it is envisioned that those skilled in the art may devise various modifications without departing from the spirit and scope of the appended claims. It will therefore be appreciated that the scope of the disclosure and the appended claims is not limited to the specific embodiments illustrated in and discussed with respect to the drawings and that modifications and other embodiments are intended to be included within the scope of the disclosure and appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the disclosure and the appended claims.

## Claims

1. A cable stripper comprising:
first and second bodies;
a slide bar connecting the first body to the second body;
a plate mounted on the slide bar and being moveable relative to the slide bar and to the bodies, the plate having an aperture through which the slide bar extends, the aperture being sized to be greater than a dimension of the slide bar which extends therethrough;
a spring mounted between the plate and the first body; and
a grip rotationally attached to the first body and engaged with the plate;
wherein when the grip is depressed, the grip engages with the plate and the plate engages with the slide bar which causes the slide bar and the second body to move relative to the first body.

2. The cable stripper of claim 1, wherein the spring encircles the slide bar and engages between the plate and the first body and / or wherein the slide bar extends through a passageway formed though the first body and the plate is seated within the passageway and/or wherein the first body includes a handle and /or wherein one of said bodies includes a blade attached thereto.

3. The cable stripper of claim 1, further including a second plate mounted on the slide bar and engaged with the first body, the second plate being moveable relative to the slide bar and to the bodies, the second plate having an aperture through which the slide bar extends, the aperture being sized to be greater than a dimension of the slide bar which extends therethrough;
a second spring mounted between the second plate and the first body; and
wherein when the second plate is rotated relative to the slide bar, the slide bar can move relative to the second plate by a user grasping either the slide bar or the second body and moving the slide bar and second body relative to the first body.

4. The cable stripper of claim 3, wherein the second plate has an upper end which is seated in a recess in the first body.

5. The cable stripper of claim 4, wherein a rear end of the second spring seats within a bore of the first body and a front end of the spring is secured to the second plate.

6. The cable stripper of claim 1, wherein
the spring encircles the slide bar and engages between the plate and the first body; and
the slide bar extends through a passageway formed though the first body and the plate is seated within the passageway.

7. The cable stripper of claim 6, further including a second plate mounted on the slide bar and engaged with the first body, the second plate being moveable relative to the slide bar and to the bodies, the second plate having an aperture through which the slide bar extends, the aperture being sized to be greater than a dimension of the slide bar which extends therethrough;
a second spring mounted between the second plate and the first body; and
wherein when the second plate is rotated relative to the slide bar, the slide bar can move relative to the second plate by a user grasping either the slide bar or the second body and moving the slide bar and second body relative to the first body.

8. The cable stripper of claim 7, wherein the second plate has an upper end which is seated in a recess in the first body, and a rear end of the second spring seats within a bore of the first body and a front end of the spring is secured to the second plate.

9. The cable stripper of claim 1, wherein the first and second bodies have a plurality of ball bearings mounted therein, and wherein a cable engages with the ball bearings when engaged between the first and second bodies.

10. The cable stripper of claim 1, wherein the second body has an upper portion and a lower portion which are angled relative to each other, and further comprising a plurality of ball bearings mounted in the upper portion, and a plurality of ball bearings mounted in the lower portion, and wherein a cable engages with the ball bearings when engaged between the first and second bodies.

11. The cable stripper of claim 10, further comprising a plurality of ball bearings mounted in the first body, and wherein the cable engages with the ball bearings of the first body when engaged between the first and second bodies.

12. A cable stripper comprising:
first and second bodies, said second body being moveable relative to said first body; and
a plurality of spherical ball bearings mounted in said first and second bodies, and wherein a cable engages with the ball bearings when engaged between the first and second bodies.

13. The cable stripper of claim 12, wherein the second body has an upper portion and a lower portion which are angled relative to each other, and wherein ball bearings are mounted in the upper portion, and ball bearings are mounted in the lower portion.

14. The cable stripper of claim 12, wherein the ball bearings are in rows in each of the first and second bodies and/or wherein the ball bearings are seated in slots, each slot having a front opening which prevents the ball bearings from passing therethrough and/or wherein the ball bearings are formed from one of plastic and metal.

15. The cable stripper of claim 12, wherein some of the ball bearings are formed from plastic and some of the ball bearings are formed of metal.
